**Europäisches Patentamt**

**European Patent Office**

**Office européen des brevets**

(19)

(11) **EP 1 604 790 A2**

(12) **EUROPÄISCHE PATENTANMELDUNG**

| | |
|---|---|
| (43) Veröffentlichungstag:<br>**14.12.2005 Patentblatt 2005/50** | (51) Int Cl.7: **B25J 9/16** |

(21) Anmeldenummer: **05012088.0**

(22) Anmeldetag: **04.06.2005**

| | |
|---|---|
| (84) Benannte Vertragsstaaten:<br>**AT BE BG CH CY CZ DE DK EE ES FI FR GB GR**<br>**HU IE IS IT LI LT LU MC NL PL PT RO SE SI SK TR**<br>Benannte Erstreckungsstaaten:<br>**AL BA HR LV MK YU** | (72) Erfinder:<br>• **Hietmann, Gerhard**<br>  **86405 Herbertshofen (DE)**<br>• **Weiss, Martin, Dr.**<br>  **86459 Margertshausen (DE)** |
| (30) Priorität: **08.06.2004 DE 102004027944** | (74) Vertreter: **Lempert, Jost et al**<br>**Patentanwälte**<br>**Lichti, Lempert, Lasch, Lenz,**<br>**Postfach 41 07 60**<br>**76207 Karlsruhe (DE)** |
| (71) Anmelder: **KUKA Roboter GmbH**<br>**86165 Augsburg (DE)** | |

(54) **Verfahren zum Schützen eines Roboters gegen Kollisionen**

(57) Die Erfindung betrifft ein Verfahren zum Schützen von mindestens zwei Robotern, insbesondere Mehrachs-Industrie-Robotern gegen Kollisionen, bei dem Bewegungen eines Roboters automatisch auf mögliche Kollisionen geprüft werden und in den Bewegungsablauf automatisch Verriegelungen eingefügt werden.

Fig. 1

**Beschreibung**

Die Erfindung betrifft ein Verfahren zum Schützen mindestens eines Roboters, insbesondere mindestens eines Mehrachs-Industrie-Roboters gegen Kollisionen.

Innerhalb einer Produktionszelle sind asynchrone Bewegungsabläufe der Roboter und anderer beweglicher Objekte durch eine nicht synchronisierte Material-Zu-/Abführung (Einlegestation, Shuttle, Zwischenpuffer-Füllsand, unterschiedliche Bearbeitungszeiten, ...) nicht vermeidbar und bezüglich der Bearbeitungszeit meist optimal. Um vorgegebene Fügefolgen einzuhalten, müssen Abläufe zudem auch sequentiell abgearbeitet werden. Erfordert nun eine Applikation bzw. ein Prozess eine Bearbeitung durch mehrere Roboter, Zusatzachsen oder Transportsysteme in einem räumlich engen Bereich oder einem gemeinsam genutzten Arbeitsbereich, so können sich Roboter (Objekt)-Bewegungsbahnen kreuzen. Dies führt dann zu einer Kollision und zu einem Schaden am Roboter, Flansch-Werkzeug, Transportsystem oder anderen Peripherie-Komponenten.

Um dies zu verhindern, müssen entsprechende Mechanismen zur Vermeidung von Kollisionen realisiert werden. Dies geschieht heute durch eine zeitversetzte Nutzung gemeinsamer Arbeitsbereiche oder Bewegungskorridore. Welcher Roboter, welche Zusatzachse oder welches Transportsystem zu welcher Zeit und in welcher Reihenfolge sich im gemeinsam genutzten Arbeitsbereich oder Raumbereich aufhält, wird heute vom Anwender durch Verriegelungsanweisungen im Roboter-Programm festgelegt. Die Kommunikation der Verriegelungsinformationen erfolgt entweder über digitale Ein-/Ausgänge, die jede Robotersteuerung mit einer zentralen speicherprogrammierbaren Steuerung (SPS) austauscht. Dabei erfolgt die Organisation der Arbeitsbereiche auf der SPS. Bekannt ist auch der Austausch von Verriegelungsinformationen über ein Bussystem unter den beteiligten Robotersteuerungen ohne Einbindung einer SPS. Die Verwaltung der Arbeitsbereiche erfolgt dabei auf einem oder mehreren Robotersteuerungen. Bei dieser Art der Verriegelung werden keine räumlichen Sperr- oder Arbeitsbereiche definiert, sondern es wird nur über ein Signal kommuniziert oder überprüft, dass der Roboter eine bestimmte Programmstelle durchlaufen hat. Dass es dabei nicht zu einer Kollision kommt, liegt einzig und alleine in der Verantwortung des Programmierers.

Verriegelungen entsprechen dem aus der Informatik bekannten Semaphoren-Mechanismus zum Schutz kritischer Bereiche, etwa gemeinsam genutzter Ressourcen. Man unterscheidet binäre Semaphoren für den exklusiven Schutz kritischer Bereiche oder zählende Semaphoren (z.B. Edsger W. Dijkstra 1965: Solution of a problem in concurrent programming control, Communications of the ACM, Vol. 8 Nr. 9). In dieser Erfindung werden nur binäre Semaphoren verwendet, da Arbeitsräume von Robotern exklusiv verwendet werden. Binäre Semaphoren entsprechen "bewachten" binären Variablen, die angeben, ob der kritische Bereich belegt ist. Ein Mechanismus des Betriebssystems oder der Robotersteuerung garantiert, dass nur jeweils ein Prozess in Besitz der Semaphore gelangen kann.

Implentierungen finden sich in allen Echtzeitbetriebssystemen, wie vxWorks oder auch in Robotersteuerungen, wie gemäß der EP 1 336 909 A2, deren Offenbarung vollauf zum Offenbarungsgehalt der vorliegenden Anmeldung gemacht wird. Bei verteilten Systemen, wie Robotersteuerungen, tritt das zusätzliche Problem auf, dass der Semaphorenzugriff über Datenleitungen erfolgt.

In vielen Anwendungen der Robotik und Automatisierungstechnik wird der Zugriff auf einen kritischen Bereich durch Setzen eines binären Ausgangs auf einem Bussystem signalisiert. Jeder Teilnehmer muss vor der Verwendung des kritischen Bereichs prüfen, ob diese Variable gesetzt ist. Dies liefert allerdings nicht die durch Semaphore geleistete Sicherheit, da die zwei Operationen "prüfen, ob Variable gesetzt ist, und ggf. setzen" in der Regel unterbrechbar ist.

Erreicht ein Roboter einen kollisionsgefährdeten Bereich, wie einen von zwei Robotern gemeinsam genutzten Bereich, so prüft er über eine im Programm vorgesehene Anweisung "EnterSpace", ob der Arbeitsbereich frei ist. Ist dies der Fall, kann der Roboter in den Arbeitsbereich einfahren. Verlässt er diesen, so gibt er über einen Befehl "ExitSpace" den Bereich frei. Ist der Bereich nicht frei, so muss der Roboter warten, bis der den Bereich belegende Roboter ihn in der vorstehend skizzierten Weise freigegeben hat.

Da in vielen Fällen mehrere Roboter auf sehr engem Raum arbeiten und die Bewegungen nicht synchronisiert erfolgen, ist es für den Anwender nicht offensichtlich, welcher Roboter mit welchem anderen Roboter kollidieren kann. Eine Kollisionsmöglichkeit besteht nicht nur mit der Roboterhand oder dem Werkzeug, das der Roboter trägt. Alle bewegten Teile können mit anderen Objekten in der Bearbeitungszelle zusammenstoßen. Beim Roboter kann das die gesamte Mechanikstruktur sein. Weiterhin sind betroffen das Werkzeug, das Bauteil, das vom Werkzeug getragen wird, Transportsysteme, Zusatzachskinematiken, Bauteilspanner, Schutzzäune, Säulen, Tische oder dergleichen.

Falls der Programmierer eine Verriegelung vergisst, aus Versehen löscht, oder anderweitig missachtet, kann dies zu einer Kollision führen. Besonders bei der Inbetriebnahmephase einer Produktionszelle-/anlage können so kostspielige Störungen auftreten. Aufgrund der asynchronen Bewegungsabläufe führen nicht erkannte Kollisionspotentiale aber auch bei einer produzierbaren Anlage zu Zusammenstößen, wenn eine kritische Konstellation zufällig zum ersten Mal auftritt und die erforderliche Verriegelung fehlt.

Bei dem Vorgehen der Online-Kollisionserkennung sind folgende Probleme zu nennen: Da bei den Robotern bei Erkennen einer möglichen Kollision ein Stopp veranlasst wird und die beweglichen Roboterteile einen geschwindigkeits- oder lastabhängigen Bremsweg zurücklegen, muss eine vorausschauende Kollisionsprüfung unter Berücksichtigung des Bremsweges erfolgen. Dies ist in der Praxis nicht immer einfach. Zum einen ist diese Vorausschau in einem Robotersystem nicht einfach zu realisieren und auch der von der Bewegungsenergie abhängige Bremsweg lässt keinen konstanten Vorausschau-Weg zu. Zum anderen ist eine echtzeitfähige Kollisionsüberprüfung von mehreren komplexen Objekten aus Rechenzeit- und Speichergründen kaum realisierbar. Der Hauptnachteil ist aber, dass Kollisionspotentiale erst beim Auftreten einer möglichen Kollision erkannt werden und dies zum Roboterstopp führt. Damit wird die Produktion unterbrochen und der Anwender muss im Produktionsbetrieb in das Programm eingreifen und entsprechende Verriegelungen programmieren.

Ein weiterer bekannter Ansatz ist die "online-kollisionsfreie" Bahnplanung. Dabei wird beim Erkennen eines Kollisionspotentials versucht, die Roboterbewegungen so zu verändern, dass die Roboter kollisionsfrei aneinander vorbeifahren können. Neben den Problemen der oben beschriebenen Vorausschau und der Echtzeitfähigkeit, die hier ebenfalls gelten, sind die Anforderungen bei gemeinsam genutzten Arbeitsbereichen nicht zufriedenstellend gelöst. In solchen Anwendungen ist es erforderlich, dass z.B. ein Roboter zuerst seine Aufgabe an einem Bauteil vollbringt, bevor die Bearbeitung mit dem anderen Roboter erfolgen kann. Die automatische Planung einer kollisionsfreien Bahn kann hier nicht zu einer befriedigenden Lösung führen. Das Wissen des Anwenders über den richtigen/optimalen Haltepunkt des wartenden Roboters und das Wissen über die Reihenfolge der Roboterbearbeitung im gemeinsamen Arbeitsbereich ist heute aufgrund der gegebenen Komplexität nicht zufriedenstellend auf ein Programm abbildbar.

Eine praxistaugliche Generierung von optimalen kollisionsfreien Bahnen und eine automatische Festlegung von optimalen Haltepunkten und Bewegungssequenzen (Reihenfolge der Nutzung gemeinsamer Arbeitsbereiche) ist in komplexen Bearbeitungszellen mit Robotern und Transfersystemen daher heute nicht möglich.

Der Erfindung liegt die Aufgabe zugrunde, ein Verfahren anzugeben, mit dem mindestens ein Roboter zuverlässig gegen Kollisionen, insbesondere anderen Robotern geschützt werden kann.

Erfindungsgemäß wird die genannte Aufgabe bei einem Verfahren der eingangs genannten Art dadurch gelöst, dass Bewegungen des mindestens einen Roboters automatisch auf mögliche Kollisionen geprüft werden und dass in den Bewegungsablauf automatisch Verriegelungen eingefügt werden bzw. dem Anwender Hinweise auf einzutragende Verriegelungen gegeben werden.

Die Erfindung beinhaltet also eine offline-Analyse der beteiligten Roboterprogramme aufgrund derer die Roboterprogramme, falls notwendig, durch Einfügen von Verriegelungen modifiziert werden. Die Kollisonsprüfung - für Programmiersätze - erfolgt für Sätze ("unit operating command") offline, d.h. vor Start der Roboterprogramme für alle möglichen Kombinationen von Sätzen auf den beteiligten Robotern. Erfindungsgemäß erfolgt also eine Ermittlung von Programmstellen oder Satznummern, an denen Verriegelungsanweisungen in die Programme einzufügen sind. Diese offline-Verarbeitung kann Modelle mit hohem Detailgrad enthalten, da keine Echtzeitforderung an diesen Verarbeitungsschritt gestellt wird. Im Rahmen der Erfindung können interne Zwischenergebnisse dieser Kollisionsprüfung abgelegt werden, wodurch eine Möglichkeit z.B. des Nachteachens nur weniger Punkte gegeben wird, für die wenig Rechenzeit benötigt wird. Das Ergebnis der Kollisionsprüfung wird über Verriegelungsanweisungen im Programm eingefügt, d.h. die Programme werden erweitert. Ein Prüfen auf "Warten notwendig" ist nicht an Bewegungsbefehle gekoppelt, sondern eine eigenständige Anweisung des Roboterprogramms. Durch die feinere Kollisionsprüfung wird aber als entscheidender Vorteil Taktzeit gewonnen.

Nach der Erfindung wird also off-line vor Start der Roboterprogramme eine Kollisionsprüfung durchgeführt und es werden gegebenenfalls Verriegelungsanweisungen (Semaphoren) eingefügt, die zur Laufzeit auf den Austausch binärer Werte abgebildet werden. Es wird keine geometrische Information ausgetauscht; die geometrische Verarbeitung erfolgte vielmehr off-line und wurde in binäre Variablen konzentriert. Das Ergebnis sind kollisionsfrei lauffähige Programme, die ohne Online-Kollisionserkennung auskommen.

Wesentlich für die Erfindung ist daher:

1. Roboterprogramme werden vor deren Ausführung auf Kollisionspotentiale hin überprüft.
2. Über den Verriegelungsmechanismus nach Art von Semaphoren werden nur binäre Werte zwischen den Robotersteuerungen ausgetauscht. Es erfolgt kein Austausch geometrischer Information über den Arbeitsbereich oder den vom Roboter belegten Arbeitsraum.
3. Verriegelungen sind eigene Programmanweisungen, unabhängig von Bewegungsbefehlen. Verriegelungsbefehle lösen Kommunikation zwischen den beteiligten Steuerungen zum Austausch der Semaphor-Variablen aus. Dafür erfolgt aber bei Bewegungsbefehlen nach Art der Erfindung keine implizite Kommunikation zum Austausch geometrischer Information, d.h. keine Zeitverzögerung bei Bewegungsbefehlen.
4. Zur Laufzeit der Roboterprogramme erfolgt keine Kollisionsüberprüfung.

Durch das erfindungsgemäße Verfahren wird vermieden, dass notwendige Verriegelungen vergessen werden. Darüber hinaus schafft das erfindungsgemäße Verfahren die Voraussetzungen dahingehend, dass überflüssige Verriegelungen vermieden werden. Das erfindungsgemäße Verfahren arbeitet Offline. Statt einen automatischen Eintrag der Verriegelungen in die Programme, kann auch alternativ durch das Verfahren ein entsprechender Vorschlag an den Bediener ausgegeben werden.

Gemäß einer bevorzugten Ausgestaltung des erfindungsgemäßen Verfahrens sieht die Erfindung vor, dass vor Einfügen einer Verriegelung, vorzugsweise vor dem Prüfen auf mögliche Kollisionen, zulässige Verriegelungspunkte bestimmt werden, wodurch die verriegelten Bereiche beliebige Länge, unabhängig von Bewegungsbefehlen im Programmtext, erreichen können. In einer bevorzugten Ausbildung des erfindungsgemäßen Verfahrens kann dies dadurch geschehen, dass Satzgrenzen als mögliche Verriegelungspunkte bestimmt werden.

Ein "Satz" ist dabei ein Programmabschnitt minimaler Länge zwischen zwei möglichen Verriegelungen. Satzgrenzen sind die Grenzen eines solchen Satzes. Diese können beispielsweise dadurch bestimmt sein, dass der Roboter sich an ihnen zum Stillstand kommt, sich also an einem Genauhaltpunkt befindet. Es ist auch möglich, z.B. durch Bahnschaltfunktionen (Trigger bei KUKA) Verriegelungen auf der Bahn, d.h. nicht notwendig an einem Genauhaltpunkt, zu programmieren. Aber auch in diesem Fall ist die Aktivierung bzw. Deaktivierung der Verriegelung nur mit der Auflösung des Interpolationstaktes möglich. In diesem Fall sind dann Satzgrenzen möglich an den diskreten Positionen, die sich bei Abtastung der Bahn mit Interpolationstakt der jeweiligen Steuerung und 100 % Geschwindigkeit ergeben. Es ist weiterhin möglich, dass Vorgaben über einen kartesischen oder achsspezifischen Abstand gemacht werden, der zwischen zwei Verriegelungen mindestens liegen muss. Hierdurch ist eine "Schrittweitensteuerung" für die Verriegelung möglich. Im Extremfall kann auch ein Verriegelungspunkt in jedem Interpolationstakt vorgesehen werden. In der Robotik wird dabei anders als üblicherweise in der Mathematik unter dem Begriff "Interpolation" die diskrete Abtastung eines (Geschwindigkeits-)Profils oder einer Bahn (im Raum) verstanden.

Nach einer weiteren bevorzugten Ausgestaltung des Verfahrens ist vorgesehen, dass zur Kollisionserkennung Hüllobjekte des mindestens einen Roboters oder von Roboterteilen erzeugt werden, die auf Kollisionen hin geprüft werden, wobei in bevorzugter Weiterbildung in an sich bekannter Weise die Hierarchien derartiger Hüllobjekte erzeugt werden, die insbesondere mit beliebig hohem Detailgrad erzeugt werden können. Zur Verringerung des mittleren Aufwands eines Kollisionstests zwischen zwei Objekten wird dabei eine Hierarchie von Hüllobjekten (Bounding Volumes) verwendet. Die Hierarchie umfasst dabei einfach strukturierte Körper, welche die gesamte Geometrie des ursprünglichen Objekts umschließen, bis hin zu dessen konvexer Hülle. Die Hüllobjekte lassen sich im Mittel schneller auf die aktuelle Position transformieren und auf Kollision testen, als die exakte Geometrie der zugehörigen Objekte. Die Verwendung von Hüllobjekten zum schnellen Ausschluss von Kollisionen ist eine geeignete Methode, annähernd Echtzeitfähigkeit zu erreichen. Mögliche Hüllobjekte sind dabei Kugeln, Achsenausgerichtete Boxen (AABB), orientierte Boxen (OBB) und konvexe Hüllen sowie gegebenenfalls weitere geometrische Hüllkörper. Die Hüllobjekte werden meist offline erzeugt und aufsteigend nach der Genauigkeit ihrer Approximation geordnet. Eine Ausnahme bilden die AABBs, welche das System nach jeder Bewegung des Objekts auf Basis einer "lokalen" OBB neu generiert. Als Heuristik für den Approximationsgrad dient das Verhältnis zwischen dem Volumen des Hüllkörpers und dem Volumen des zugrundeliegenden Objekts. Besitzen verschiedene Typen von Hüllkörpern einen ähnlichen Approximationsgrad, werden die Hüllkörper mit den zeitaufwändigeren Kollisionstests verworfen. Die oberste Stufe der Hierarchie und somit die genaueste Darstellung eines Objekts bildet dessen konvexe Hülle. Zur Kollisionserkennung bzw. Abstandsberechnung zwischen konvexen Hüllen können unterschiedliche Programmpakete eingesetzt werden. Solange die Hüllkörper beider Objekte kollidieren, werden die Hierarchien durchlaufen, bis zum Test der konvexen Hüllen gegeneinander. Überschneiden sich diese ebenfalls, liefert die Kollisionserkennung "kollidiere" zurück.

In alternativer bevorzugter Ausgestaltung ist vorgesehen, dass die Schnittmenge der Punkte beider Volumina der so erzeugten Hüllobjekte mindestens eines Roboters mit dem in entsprechender Weise bestimmten Hüllobjekt eines anderen Gegenstandes, der ebenfalls ein Roboter sein kann, bestimmt wird oder aber, dass der mittlere Abstand zweier Hüllobjekte bestimmt wird.

Gemäß einer äußerst bevorzugten Ausgestaltung der Erfindung kann vorgesehen sein, dass der Arbeitsraum des mindestens einen Roboters sowie eines anderen bewegten Gegenstandes, der ebenfalls ein Roboter sein kann, in disjunkte Teilvolumina aufgeteilt wird und dass für jedes Teilvolumen in einer zugeordneten Tabelle eingetragen wird, für welche Sätze der mindestens eine Roboter und das weitere Objekt das jeweilige Teilvolumen belegt. In bevorzugter Ausgestaltung können dabei die disjunkten Teilvolumen disjunkte Würfel sein.

Eine weitere bevorzugte Ausgestaltung des erfindungsgemäßen Verfahrens sieht vor, dass aufeinanderfolgende bestimmte Verriegelungen miteinander verschmolzen werden, um die Anzahl der Verriegelungen klein zu halten und hierdurch den Kommunikationsaufwand zu verringern.

Weitere bevorzugte Ausgestaltungen der Erfindung ergeben sich aus den Ansprüchen oder aus der nachfolgenden Beschreibung, in der ein Ausführungsbeispiel der Erfindung unter Bezugnahme auf die Zeichnungen im Einzelnen erläutert ist.

Dabei zeigt:

Fig. 1 eine Roboterzelle mit drei Robotern;

Fig. 2 den Ablauf von Bewegungen zweier Roboter mit Verriegelungen;

Fig. 3 ein Ablaufdiagramm zum gesamten erfindungsgemäßen Verfahren;

Fig. 4 eine schematische Darstellung von Roboterprogrammen mit Satzstruktur und Kollisionsgefahren;

Fig. 5 eine Darstellung entsprechend der Fig. 4 mit Semaphoren und Möglichkeiten zur Verschmelzung, und

Fig. 6 ein Beispiel für das Expandieren eines Unterprogramms.

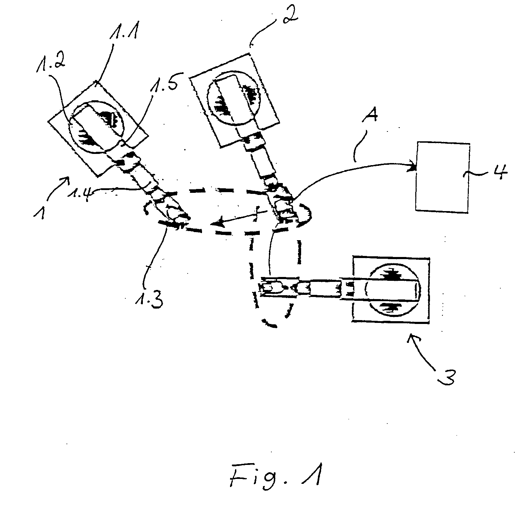

Die Fig. 1 zeigt eine Roboterzelle mit drei zusammenarbeitenden Robotern 1, 2, 3. Die einzelnen Teile Sockel 1.1, Karussell 1.2, Schwinge 1.3, Roboterarm 1.4 und Roboterhand mit Werkzeug 1.5 sind beim Roboter 1 bezeichnet. Die weiteren Roboter 2, 3 sind entsprechend ausgestaltet. Die Roboter sind derart angeordnet und arbeiten derart, dass sich Kollisionsbereiche ergeben, die in der Fig. 1 schematisch gestrichelt dargestellt sind. Beispielsweise würde bei der dargestellten Position des Roboters 2 der Roboter 3, wenn er aus seiner ebenfalls dargestellten Stellung sich zur Ablage eines Bauteils 4 in die für dieses dargestellte Stellung entsprechend dem Pfeil A bewegen würde, eine Kollision mit dem Roboter 2 auftreten.

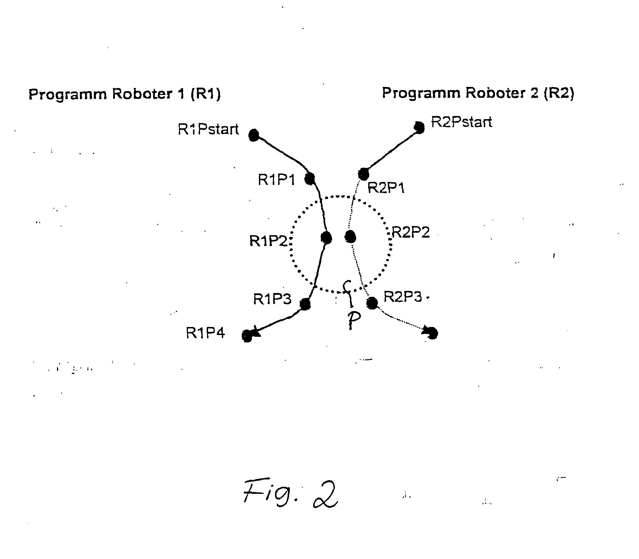

Zur Verhinderung einer solchen Kollision werden Verriegelungen gesetzt und freigegeben, wie sie in der Fig. 2 dargestellt sind.

Ein gemeinsam genutzter Arbeitsbereich, in dem eine Kollision auftreten könnte, ist hier punktiert dargestellt. Beispielsweise startet ein Roboter 1 von seinem Startpunkt R1Pstart und bewegt sich zu einem Punkt R1P1 vor dem Kollisionsbereich P. Er prüft über eine an dieser Stelle in seinem Steuerprogramm vorgesehene Anweisung "EnterSpace", ob der Arbeitsbereich P, in dem sich der nächste Zielpunkt R1P2 befindet, frei ist. Ist dies der Fall, so kann der Roboter 1 in den Arbeitsbereich einfahren. Gelangt nun der Roboter 2 später zu seiner Eintrittsstelle R2P1 in den gemeinsamen Arbeitsbereich P, so führt er ebenfalls die Anweisung "EnterSpace" aus, erhält aber, da der Roboter 1 in den Arbeitsbereich P eingefahren ist, ein Signal, dass der Bereich durch den Roboter 1 belegt ist, so dass der Roboter 2 warten muss, bis R1 den Bereich freigibt. Dies geschieht nach dem Verlassen des Arbeitsbereichs P durch den Roboter 1 am Punkt R1P3 durch den von diesem ausgegebenen Befehl "ExitSpace", wobei die Anweisung "EnterSpace" gegebenenfalls einen bahntreuen Stopp auslöst, d.h. auch beim Stopp keine Kollision durch Verlassen der Bahn erfolgt.

Gemäß der Erfindung sind die Programme auf mehreren Robotersteuerungen verteilt. Ein weiterer Rechner dient als Zentralrechner für das Verfahren (es ist möglich, dass eine der Robotersteuerungen als Zentralrechner dient). Die Rechner sind vernetzt. Eine erste Ausprägung der Erfindung sieht vor, dass alle Programme aller Roboter auf den Robotersteuerungen abgearbeitet werden (evtl. in einem "Trockenlauf", bei dem die realen Achsen sich nicht bewegen). Die generierten Bahnen werden in gewissen Zeitabständen interpoliert, die Schrittweite der Interpolation ist vom Benutzer evtl. einstellbar. Zu jedem Interpolationspunkt werden anhand der aktuellen Achswinkel und CAD-Daten Hüllobjekte für die Roboterkonfiguration erzeugt (dieser Schritt ist sowohl auf den Robotersteuerungen als auch auf dem Zentralrechner möglich). Die Hüllobjekte werden auf dem Zentralrechner abgelegt. Eine zweite Ausprägung der Erfindung sieht vor, dass der Steuerrechner über Netzverbindungen alle Programme von allen Robotersteuerungen, sowie Hüllobjekte für die Roboter, Zusatzachsen und alle verwendeten Peripheriekomponenten (Werkzeuge, Werkstücke) von den Robotersteuerungen in lokalen Speicher kopiert, und die Programme in einem Trockenlauf interpretiert. CAD-Daten sind schon auf dem Zentralrechner vorhanden. Analog zur ersten Ausprägung werden Hüllobjekte für alle Zeitpunkte erstellt.

Die Datenverwaltung und Kollisionsüberprüfung kann entweder verteilt auf den Robotersteuerungen laufen, oder auf einem speziell für diesen Zweck eingesetzten Rechner. Alle Informationen, die für eine Aktualisierung des Zellenmodells erforderlich sind (aktuelle Roboterachspositionen, Position der Transportsysteme, Abmessungen von Werkzeugen und Bauteilen, ...), müssen natürlich an die Stelle kommuniziert werden, wo sie für die Aktualisierung des Zellenmodells und die Kollisionsberechnungen benötigt werden. Dabei sieht die Erfindung sowohl die Ausprägung vor

- dass alle Programme aus CAD/CAM-Daten offline erzeugt, und Verriegelungen nach dem erfindungsgemäßen Verfahren eingefügt werden, bevor die Programme erstmals an der Roboteranlage gefahren werden

- dass Programme entweder geteacht oder offline erzeugt werden, danach auf die Roboteranlagen gebracht, und danach die Verriegelungen nach dem erfindungsgemäßen Verfahren an der Anlage (unter Nutzung der in den Steuerungen vorhandenen Rechner) eingefügt werden. "Offline-Kollisionsvermeidung" in diesem Sinn meint, dass die Verriegelungen unabhängig vom und zeitlich vor dem tatsächlichen Anlagenlauf eingefügt werden.

"Offline Kollisionsvermeidung" heißt also, dass während des tatsächlichen Programmlaufs der Roboter keine Information über geometrische Modelle zur Kollisionsvermeidung in den Steuerungen vorhanden sein muss. Derartige Information wurde vorher, also "offline", verwendet, um die verriegelungen zu bestimmen und einzutragen.

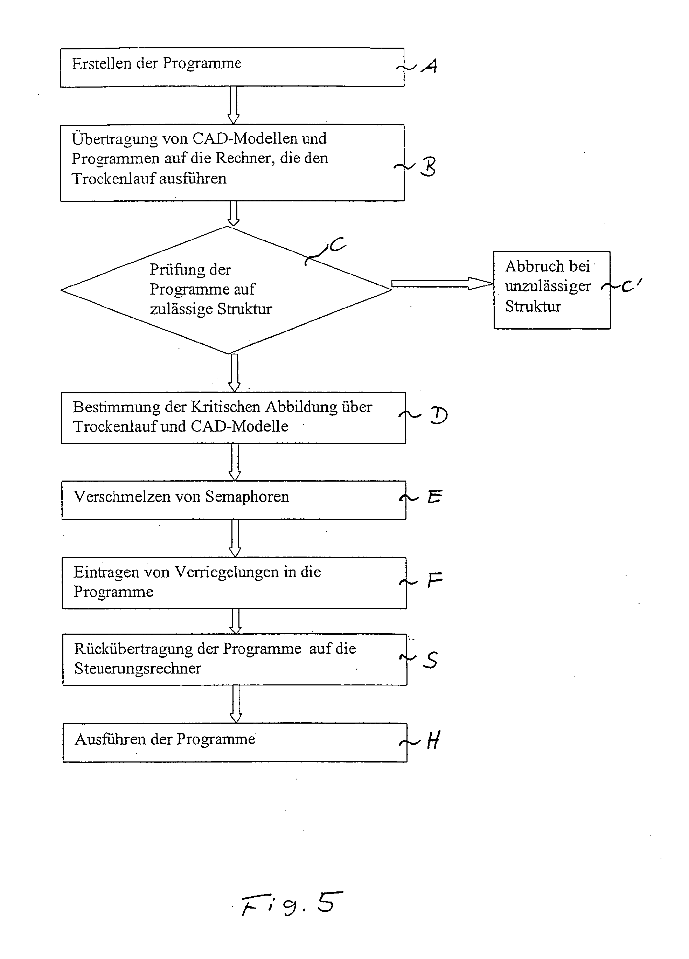

Das erfindungsgemäße Verfahren geht demgemäß davon aus, dass gemäß Fig. 5 zunächst Steuerprogramme für den oder die Roboter erstellt werden (Schritt A). Diese werden ebenso wie die Hüllobjekte der Roboter auf Rechner übertragen, mittels derer ein "Trockenlauf", d.h. ein Durchlauf der Programme vorgenommen wird, ohne dass die Roboter tatsächlich bewegt werden (Schritt B).

Die Programme werden zunächst auf eine zulässige Struktur geprüft (Schritt C); ist eine solche nicht gegeben, so erfolgt ein Abbruch (Schritt C'). Bei zulässiger Struktur wird die kritische Abbildung über den genannten "Trockenlauf" und die vorgesehenen CAD-Modelle bestimmt (Schritt D).

Semaphoren werden verschmolzen (Schritt E).

Sodann werden automatisch Verriegelungen in die Programme eingetragen (Schritt F), wobei eine gemeinsame Verriegelung für zwei Sätze $S(i,1)$ und $S(i+1,1)$ nicht, wenn diese im Programm von Roboter 1 durch Verriegelungen gegen Aufenthalt von Roboter 2 in denselben Bereichen geschützt sind. Dann werden die Programme werden gegebenenfalls auf die eigentlichen Steuerrechner zurückübertragen (Schritt G), wo die Programme sodann ausgeführt werden können (Schritt H).

Der Ablauf des erfindungsgemäßen Verfahrens zum Setzen und Freigeben von Verriegelungen in Steuerprogrammen für Roboter gestaltet sich im Einzelnen wie folgt:

Die Programmstellen werden analysiert und Programmstellen festgestellt, an denen Verriegelungen im Programm eingefügt werden können. Diese sind nur durch die Bewegungsbefehle eingeschränkt, während andere Programmbefehle, wie Rechenoperationen, Zuweisungen u.s.w. für das Verfahren nicht relevant sind. Es wird zunächst geprüft, ob alle Punkte in den Programmen fest vorgegeben sind und nicht durch eine Berechnungsvorschrift während des Programmablaufs, z. B. anhand von externen Signalen berechnet werden, ob keine Bewegungen stattfinden, die unmittelbar externe Signale verwenden, wie sensorengeführte Bewegungen, da hier die Bewegungsbahn nicht festliegt und ob keine verzweigende Bewegungen an beliebigen Bahnpunkten erlaubt sind, beispielsweise aufgrund von Interrupt-Anweisungen. In diesen Fällen ist eine Durchführung des beschriebenen Verfahrens nicht möglich.

Es werden R Roboter betrachtet, wobei diese mit $r = 1...R$ bezeichnet werden. Auf jedem Roboter r läuft entweder (zyklisch) ein Programm $P(r)$ mit einer Dauer $T(r)$ oder zufällig hintereinander eines von $L(r)$ Programmen $P(1,r)$, wobei $1 = 1, ..., L(r)$ mit der Dauer $T(l,r)$ ist. In diesem Fall wird angenommen, dass alle Roboter am Ende eines jeden Programms in eine definierte Ausgangsposition fahren, die also automatisch Startpunkt aller Programme ist. Andernfalls können zu jedem Programm neue Programme definiert werden, die zu allen Startpunkten der anderen Programme fahren und es kann diese erweiterte Menge von Programmen dem Verfahren zugrundegelegt werden.

Falls nur an festen Stellen Synchronisationspunkte möglich sind, werden die Bereiche zwischen den möglichen Synchronisationspunkten in der schon oben skizzierten Weise als Sätze $S(i,r)$ bezeichnet mit $i < 1, ..., M(r)$, wobei $M(r)$ die Anzahl der Sätze von Programmen $P(r)$ benennt.

Die Bahn von Programm $P(r)$ wird an $N(r)$ Zeitpunkten $t(1,r) < t(2,r) <...< t(N(r),r)$ ausgewertet und für die zum Zeitpunkt $t(i,r)$ gültige Achskonfiguration und das aktive Werkzeug das entsprechende durch den Roboter belegte Volumen $V(i,r) \subset R^3$ anhand der CAD-Modelle bestimmt. Die Zeitabstände sind nicht notwendig fix, gegebenenfalls ist auch eine Abtastung anhand gefahrener kartesischer oder achsspezifischer Wege möglich. Bei einer solchen "Schrittweitensteuerung" wird die Bahn so abgetastet, dass zwischen zwei Zeitpunkten keine Achse bzw. kartesische Komponente oder Orientierungskomponente mehr als einen spezifizierbaren Weg zurückgelegt hat.

Bei zyklischen Programmen können Indizes, die Zeitpunkten entsprechen, immer modulo der entsprechenden Punktanzahl betrachtet werden: Für Roboter r mit $N(r)$ Stützpunkten gelte Gleichheit von Indizes $i = j$ immer modulo $N(r)$, d.h. man identifiziert als äquivalent z.B. $N(r) + 1 = 1$. Dies entspricht der offensichtlichen Tatsache, dass bei einer zyklischen Programmbearbeitung die vom Verfahren eingeführten Synchronisationspunkte nur von der geometrischen Bahn abhängen und daher immer dieselben sind, unabhängig davon, welcher Bahnpunkt als Startpunkt 1 für das Verfahren gewählt wird. Für Programme mit Kontrollstrukturen ist die zyklische Nachfolgerrelation durch mengenwertige Nachfolgerbeschreibungen zu ersetzen. Im Übrigen werden die in der Mengentheorie und Prädikatenlogik üblichen Notationen verwendet.

Nach Überprüfen der Programme werden Satzgrenzen eingetragen. Bei einer linearen Programmablaufstruktur, bei der alle Programme aus einer zyklisch bzw. einer einmalig durchlaufenen Folge von Bewegungen bestehen, können Befehle z.B. mit einer Zahl identifiziert werden, und zu jedem Befehl kann auf einfache Weise (Addition bzw. Subtraktion von 1) der vorhergehende bzw. nachfolgende Befehl bestimmt werden. Mit Kontrollstrukturen ergibt sich potentiell eine Menge von möglichen Nachfolgern (statt der Operation "+1" müssen alle Elemente einer Nachfolgermenge betrachtet werden).

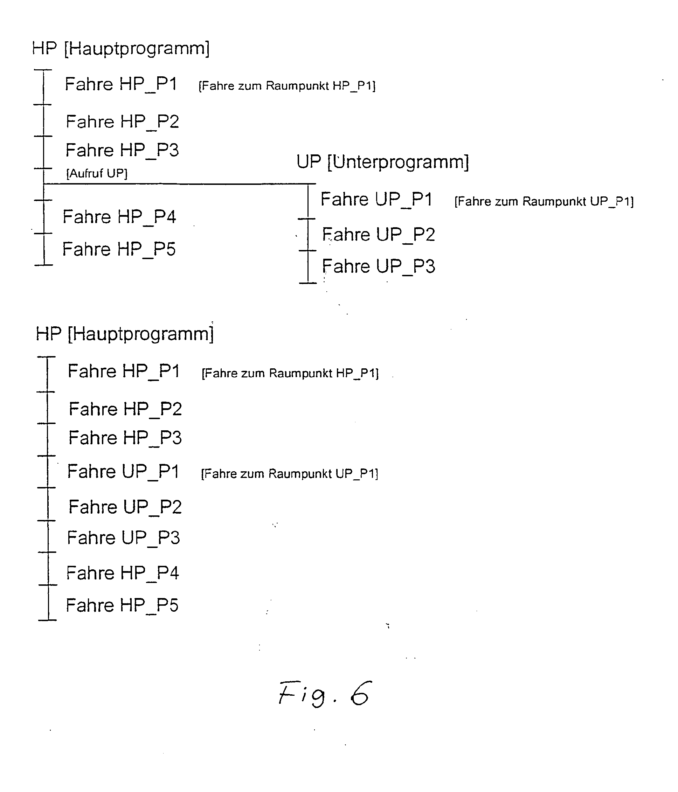

In Programmen können nach dem Stande der Technik Unterprogrammaufrufe, Verzweigungen und Schleifen verwendet werden. Diese können in einem allgemeinen Graphen (bei linearen/zyklischen Programmen als Spezialfall: Zyklus von Befehlen) abgebildet werden, der die Programmstruktur wiederspiegelt. Die Notation der hier beschriebenen Algorithmen ist dann zwar aufwändiger, dem Grunde nach aber identisch. Alternativ können z.B. Unterprogrammaufrufe mit dem hier beschriebenen Verfahren behandelt werden, indem die Befehle jedes Unterprogramms UP an die Stelle des Aufrufs expandiert werden, wie dies in Fig. 6 veranschaulicht ist.

| Original | Expandiert |
|---|---|
| PTP 1 | PTP 1 |
| PTP 2 | PTP 2 |
| UP 1 | PTP U1 |
| | LIN U11 |
| PTP 3 | PTP 3 |
| PTP 4 | PTP 4 |
| UP 1 | PTP U1 |
| | LIN U11 |
| UP 2 | PTP U2 |
| | PTP U3 |
| PTP 5 | PTP 5 |

wobei UP Unterprogramm bedeutet, PTP eine Punkt-zu-Punkt-Bewegung zu dem jeweils daneben angegebenen Punkt benennt und LIN eine Linearbewegung benennt. In der ersten Spalte findet sich eine Kurzbezeichnung für die Originalprogramme, in der zweiten eine für die gegebenenfalls expandierten Programme, die im Rahmen der Expansion den Inhalt der Unterprogramme bilden.

Nach Reduzierung auf diese "Normalform" werden Satzgrenzen eingetragen. Diese begrenzen, wie bereits erläutert, die Bewegungsabschnitte minimaler Länge, die durch die Verriegelungen geschützt werden können. Prinzipiell ist zulässig, dass eine Verriegelung in jedem Interpolationstakt bzw. sogar zu jedem kontinuierlichen Zeitpunkt gesetzt werden kann. Bei kontinuierlich verschiebbaren Verriegelungen muss allerdings eine endliche Anzahl von Stellen festgelegt werden, um die Durchführung des Verfahrens zu gewährleisten. Alternativ kann eine gewünschte Diskretisierungsstufe angegeben werden, innerhalb der Verriegelungen gesetzt werden sollen.

Im Weiteren erfolgt dann die Prüfung auf Kollisionen. Typischerweise verwenden Verfahren zur Kollisionsprüfung Hüllobjekte der Geometrie von Robotern, Werkzeugen, Werkstükken, Sensoren und weiteren in der Automatisierung üblichen Objekten. Die Hüllobjekte zur Kollisionsprüfung sind dabei nicht nur abhängig von den Gelenkvariablen des Roboters, sondern auch von dem jeweils verwendeten Werkzeug und Werkstück; z. B. belegt ein Greifer abhängig vom aktuell gegriffenen Werkstück ein unterschiedliches Raumvolumen. Bekannt sind auch Vorrichtungen zum automatischen Wechsel von mehreren Schweißzangen, Greifern u.s. w. Die Erfindung nimmt an, dass zu jedem Zeitpunkt des Programms bekannt ist, welche Werkzeuge u.s.w. aktiv sind, und dass die entsprechenden CAD-Daten in geeigneter Form zur Verfügung stehen.

Wesentlich für die Erfindung sind folgende Eigenschaften von Schnittverfahren: Zu je zwei Sätzen (d. h. Programmabschnitten verschiedener Roboter) und für jeden Zeitpunkt dieser Sätze gegebenen Hüllobjekten kann entschieden werden, ob eine Kollision möglich ist. Ergebnis dieses Tests ist eine binäre Variable. Für diesen Test können z.B. die beiden weiter unten beschriebenen Verfahren verwendet werden.

Zur Beschreibung der Verfahren sind weitere Bezeichnungen nötig: Ergebnis der Kollisionsprüfung ist eine als "kritische Abbildung" $C(i,j)$ zu bezeichnende Information. Dies wird im Folgenden nur für den Fall R=2 beschrieben, d.h. nur 2 Roboter. Eine Erweiterung auf R > 2 Roboter ist problemlos möglich. Es gilt:

$$C:\{1, ..., M(1)\} \times \{1, ..., M(2)\} \rightarrow \{TRUE, FALSE\}$$

$C(i,j):=TRUE$, falls Kollisionsgefahr bei gleichzeitigem Arbeiten von Roboter 1 in Satz i (von P(1)) und von Roboter 2 in Satz j (von P(2)) besteht,

$C(i, j) := FALSE$ sonst

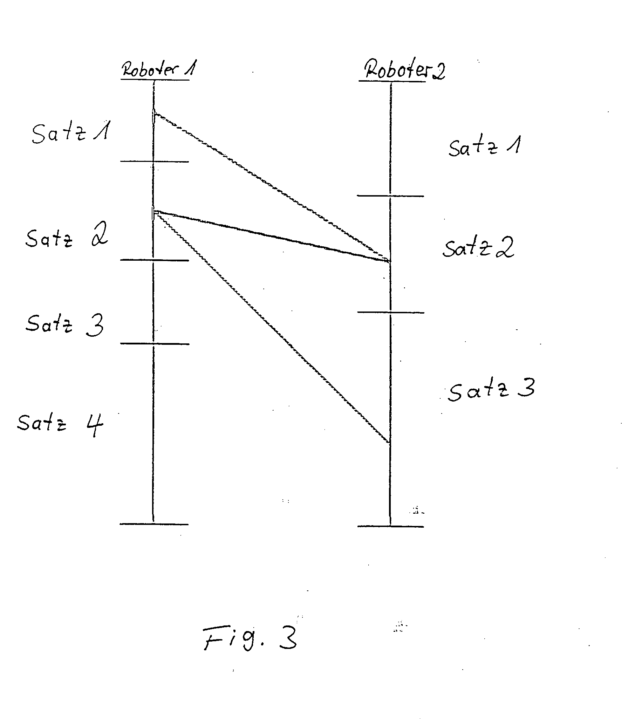

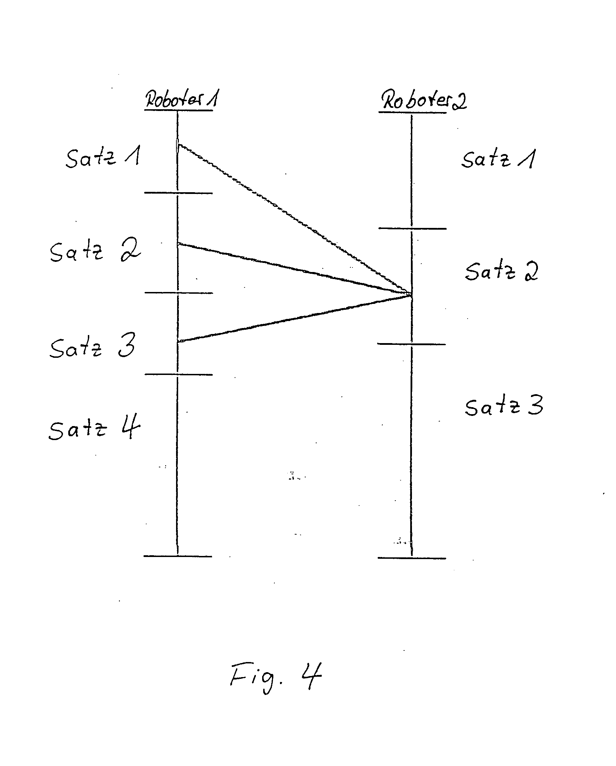

Die Sätze in den beiden Roboterprogrammen können, wie in Fig. 3 und Fig. 4 dargestellt, als nummerierte Abschnitte einer Geraden aufgetragen werden. Die Länge der Abschnitte ist unwesentlich, kann aber zur weiteren Veranschaulichung der Dauer oder des zurückgelegten Weges eines Satzes verwendet werden. Zwischen Sätzen i und j der beiden Roboter 1, 2 wird eine Verbindung gezogen, falls $C(i,j)$ = TRUE, also eine Kollisionsgefahr besteht.

Im Beispiel der Fig. 3 kann, wenn Roboter 1 in Satz 1 und Satz 2 arbeitet, Roboter 2 nicht nach Satz 2 einfahren. Sobald Roboter 2 Satz 1 verlassen (und Satz 3 erreicht) hat, kann Roboter 2 in Satz 2 einfahren, allerdings nicht nach Satz 3.

Die Überprüfung auf Kollisionen kann erfindungsgemäß, wie oben angedeutet, die Schnittbestimmung allgemeiner Mengen oder aufgrund Zerlegung des Arbeitsraums aller Roboter in digitale Teilmengen, insbesondere der "Würfel" erfolgen. Zunächst wird das erstgenannte Verfahren erläutert.

Der Algorithmus A zur Bestimmung des Durchschnitts zweier Volumina V und W (Volumen bezeichnet Teilmengen des kartesischen Raumes, die immer beschränkt, abgeschlossen und ohne Löcher sind - im mathematischen Sinn der algebraischen Topologie, der hier der Anschauung genau entsprechen kann), kann als Ergebnis entweder eine boolesche Variable liefern, $A(V,W) = \text{TRUE}$, falls sich V und W schneiden; FALSE sonst oder den minimalen Abstand der Volumina $d(V, W) = \min \{d(v,w): v \in V, w \in W\}$ (Hausdorff-Abstand). V und W schneiden sich genau dann (für abgeschlossene und beschränkte Mengen), wenn $d(V, W) = 0$. Für das erfindungsgemäße Verfahren kann dann definiert werden

$$A(V,W) = (d(V,W) = = 0)$$

Die Information $d(V,W) > 0$ kann dabei für effizientere Implementierungen der Verfahren genutzt werden: Ist $d(V,W)$ sehr groß, heißt dies, dass sich die Roboter erst gewisse Zeit bewegen müssen, um überhaupt in kritischen Abstand zu geraten. In diesem Fall kann, unter Verwendung der bekannten maximalen Geschwindigkeiten der Roboter, die Berechung einiger Schnitte unterbleiben, und "kein Schnitt" angenommen werden. Zur effizienten Implementierung wird man grundsätzlich verwenden, dass sich die Volumina von einem Zeitschritt zum nächsten nicht stark unterscheiden. Konkrete Implementierungen solcher Verfahren verwenden eine Unterteilung der Roboter- und Bauteilstrukturen in konvexe Mengen oder Hüllkurven, typischer Ellipsoide, die baumartig angeordnet sind. Für derartige Datenstrukturen können schnelle Schnittprüfungen vorgenommen werden:

$$C(i,j) = v\{A(V(t(i,1)), V(t(j,2))): t(i,1) \in S(i,1),$$

$$t(j,2) \in S(j,2)\}$$

In Worten: Sätze i (von Roboter 1) und j (von Roboter 2) sind kollisionskritisch, falls sich die Volumina von mindestens einem Zeitpunkt $t(i,1)$ in Satz i und mindestens einem Zeitpunkt $t(j,2)$ in Satz j schneiden.

Äquivalent kann die kritische Abbildung definiert werden durch:

$$C(i,j) = ((\cup\{V(t\,(i,1)) : t(i,1) \in S(i,1)\}) \cap$$

$$(\cup\{V(t(j,2)) : t(j,2) \in S(j,2)\})) \emptyset$$

Diese Operation ist aber in der Regel schwierig durchzuführen, da bei der Bildung der Vereinigung $\cup\{V(t(i,1)) :$

$t(i,1) \in S(i,1)\}$ viele strukturelle Eigenschaften verloren gehen, die von Algorithmen zur Kollisionsprüfung verwendet werden (Hierarchie, Konvexität von einhüllenden Mengen, Kugeln oder andere einfache geometrische Objekte als einhüllende Flächen). Kurz gesagt: Der Algorithmus A liefert die Schnittinformation für Zeitpunkte, die Einzelkonfigurationen des Roboters entsprechen. Die kritische Abbildung liefert dieselbe Information für Zeiträume, die Bahnen entsprechen.

Bei der Kollisionsüberprüfung muss im schlimmsten Fall jedes Robotervolumen zu jedem Zeitpunkt gegen jedes andere Robotervolumen zu allen anderen Zeitpunkten auf Kollision geprüft werden: Dies erfordert $O(N(1) \times ... \times N(R))$ Operationen (im Sinn der Komplexitätstheorie). Dies stellt eine zeitaufwändige Operation dar, selbst wenn diese Prüfung nur einmalig durchgeführt werden muss.

Die bevorzugte Ausprägung der Erfindung sieht daher folgendes, in der Regel schnellere, Verfahren vor: Der gesamte Arbeitsraum aller Roboter wird in Würfel $W(1), ..., W(Z)$ aufgeteilt (alternativ und ohne Einschränkung des Verfahrens eine Zerlegung in disjunkte Teilmengen). Über die Seitenlänge der Würfel ist die Feinheit der Kollisionserkennung einstellbar. Jedem Würfel $W(z)$ wird für jeden Roboter eine Tabelle zugeordnet, in der eingetragen wird, für welche Sätze jeder Roboter diesen Würfel belegt. Dies kann z.B. auf folgende Arten geschehen:

    1. Eine boolesche Variable $D1(z,r,s)$ mit Wert TRUE, falls Würfel $W(z)$ von Roboter r zu irgendeinem Zeitpunkt von Satz s belegt wird.

    2. Eine mengenwertige Variable $D2(z,r)$, in der alle Sätze des Programms von Roboter r eingetragen werden, die zu irgendeinem Zeitpunkt den Würfel $W(z)$ belegen.

Algorithmisch werden D1 bzw. D2 so bestimmt:

    1. Initialisiere $D1(z,r,s) = \text{FALSE}$ bzw. $D2(z,r) = 0$ für alle z,r,s
    2. Für alle Roboter r
    3. Für alle Sätze s in Programm P(r) von Roboter r
    4. Für alle Zeitpunkte $t(i,r)$ in Satz s
    5. Für alle Würfel $W(z)$
    6. Bestimme den Schnitt von $W(z)$ mit $V(t(i,r),r)$. Falls dieser nicht leer ist, setze $D1(z, r, s) = \text{TRUE}$ bzw. füge s zu $D2(z,r)$ hinzu.

Die Bestimmung der kritischen Abbildung C aus D1 oder D2 erfolgt dann so:

Für den Fall R = 2, d.h. 2 Roboter:

    1.

$$C(i,\ j)\ =\ \bigvee_{z=1}^{z}(D1(z,1,i) \wedge D1(z,2,j))$$

(d.h. = TRUE, falls Roboter 1 in Satz i und Roboter 2 in Satz j mindestens einen Würfel z zugleich belegen; FALSE sonst)

2.

$$C(i,j) = \exists z : (i \in D2(z,1)) \wedge (j \in D2(z,2))$$

(d.h. TRUE, falls für einen Würfel z Roboter 1 in Satz i und Roboter 2 in Satz j diesen Würfel zugleich belegen; FALSE sonst)

Dieses bevorzugte Verfahren zur Bestimmung der kritischen Abbildung C erfordert nur O(N(1) +...+ N(R)) Operationen verglichen mit den oben genannten O(N(1) x ... x N(R)).

Das Verfahren erfordert einigen Speicheraufwand, der aber als preiswert angesehen werden kann, während Zeit ein prinzipiell knappes Gut ist. Die Daten über Kollisionen können auch in externem Speicher abgelegt werden und zur schnellen Bestimmung der Semaphoren genutzt werden, wenn sich die Programme nur leicht geändert haben.

Nach der Kollisionsprüfung erfolgt die Bestimmung der notwendigen Verriegelungen. Übliche Roboter-Steuerungen besitzen in der Regel ein Konzept für verteilte Semaphoren. Diese können u.a. unter Verwendung von binären Ein- und Ausgängen realisiert werden.

Jedes Paar von Semaphoren-Anweisungsklammern EnterSpace (SemaphoreIdentifier) und ExitSpace (SemaphoreIdentifier) auf zwei Robotern kann als logische Verriegelung der Anweisungen zwischen den Anweisungsklammern aufgefasst werden, mithin als Verriegelung der Arbeitsbereiche, die die Roboter bei Abarbeitung der Befehle zwischen den Klammern verwenden. Typische Realisierungen von Semaphoren verwenden Ein- und Ausgänge, auf die von mehreren Steuerungen aus zugegriffen werden kann.

Die einfachste Vorgehensweise zur Vermeidung von Kollisionen besteht nun darin, alle Sätze i auf Roboter 1 und alle Sätze j auf Roboter 2, für die C(i,j) =TRUE gilt, folgendermaßen zu schützen:

Definiere Semaphoren (mit der Einfachheit demselben Namen) C(i,j) für alle i,j, für die C(i,j)=TRUE gilt. Dies bedeutet maximal M(1)*M(2) Semaphoren.

Nicht notwendigerweise, aber bevorzugt, erfolgt im Weiteren ein Verschmelzen von verriegelungen, um die Zahl der Semaphoren (Fig. 5, Schritt E) so gering wie möglich zu halten (Fig. 3, sein E). Die minimale Anzahl von Semaphoren liefert folgender Algorithmus:

1. wiederhole
2. falls C(i,k) = C(i + 1,k) für alle k, dann verschmelze Sätze S(i,1) und S(i+1,1) zu einem Satz mit nur einer Verriegelung, die ja dann hinsichtlich der Kollisionen mit Sätzen von Roboter 2 die gleichen Eigenschaften haben. Verwende statt der Semaphoren C(i,k) und C(i,k+1) nur eine Semaphore C(i,k), die der Einfachheit halber denselben Namen trägt. Die Semaphore C(i,k+1) kann eingespart werden.
3. falls C(k,j) = C(k, j + 1) für alle k, dann verschmelze Sätze S(j,2) und S(j+1,2), die ja dann hinsichtlich der Kollisionen mit Sätzen von Roboter 1 die gleichen Eigenschaften haben. Analog zu Punkt 2 kann die Semaphore C(i,k+1) eingespart werden.
4. solange es Indices i bzw. j mit Eigenschaften 2. oder 3. gibt

Man kann zeigen, dass jede andere Verschmelzungsstrategie die gegenseitige Bewegungsfreiheit der Roboter unnötig einschränkt. Im Beispiel von Fig. 4 können die Semaphoren C(1,2), C(2,2), C(3,2) zu einer Semaphore reduziert werden.

Falls C(k,j) = C(k, j + 1) für nicht alle k, dann können Sätze S(j,2) und S(j+1,2) nicht verschmolzen werden.

In Fig. 3 können die Semaphoren S(2,2) und S(2,3) nicht verschmolzen werden, da sie sich z.B. bezüglich Satz 1 von Roboter 1 unterscheiden. Verschmelzen von S(2,2) und S(2,3) würde dann auch das gleichzeitige Arbeiten von Roboter 1 in Satz 1 und Roboter 2 in Satz 3 verbieten. Verschmelzen von Semaphoren bzw. Sätzen unter schwächeren Voraussetzungen schränkt die Bewegungen unnötig ein. Streichen von Semaphoren erzeugt offensichtlich Programme mit potentiellen Kollisionen. Werden in Erweiterung der Erfindung statt linearer bzw. zyklischer Programme auch Verzweigungen und Schleifen betrachtet, werden z.B. an den Grenzen von Alternativen weitere Markierungen <nicht verschmelzen> benötigt.

Im Weiteren werden Programmanweisungen für Verriegelungen eingetragen (Fig. 5, Schritt F).

Für jede Verriegelung C(i,j) wird in jedem beteiligten Programm ein Paar von Anweisungen EnterSpace, ExitSpace um den zu schützenden Satz herum eingetragen. Ein typisches Programmpaar hat dann folgende Gestalt:

Programm für Roboter 1:

    . . .
    S(i-2, 1)
    S(i-1,1)
    EnterSpace (C(i,j))
    S(i,1)
    ExitSpace (C(i,j))
    S(i+1,1)
    S(i+2,1)
    . . .

Programm für Roboter 2:

    . . .
    S(j-2,2)
    S(j-1,2)

```
EnterSpace (C(i,j))
S(j,2)
ExitSpace (C(i,j))
S(j+1,2)
S(j+2,2)
. . .
```

Sind Verriegelungen auch innerhalb von Bewegungen möglich, z.B. an jedem IPO-Takt, sind zeitbezogene Konstrukte erforderlich, z.B. in der Sprache KRL sogenannte Trigger-Anweisungen:

```
. . .
S(i-2,1)
S(i-1,1)
Trigger Delay = x1 msec do EnterSpace (C(i,j))
Trigger Delay = x2 msec do ExitSpace (C(i,j))
S(i,1)
S(i+1,1)
S(i+2,1)
. . .
```

Nach Eintragung aller Verriegelungen und gegebenenfalls Rückübertragung der Programme auf die Steuerungsrechner, können die Programme bearbeitet werden. Dazu werden alle Roboter in eine Vorzugsposition (zugleich Startposition der Programme) verfahren, in der keine Kollisionsgefahr besteht, und alle Verriegelungen werden aufgehoben. Erreicht ein Roboterprogramm P(i) eine Verriegelung EnterSpace(S), deren Semaphore von keinem anderen Programm P(j) genommen wurde, so nimmt P(i) die Semaphore zu S und kann den Roboter ohne Stopp in den geschützten Bereich verfahren. Erreicht P(i) den Befehl zur Aufhebung der Verriegelung ExitSpace(S), so wird die Semaphore zu S freigegeben, und der geschützte Bereich verlassen. Erreicht ein Roboterprögramm P(i) eine Verriegelung EnterSpace(S), deren Semaphore von einem anderen Programm P(j) genommen wurde, erfolgt ein Stopp für Programm P(i) wegen Kollisionsgefahr. Wird die Verriegelung dann im Programm P(j) durch ExitSpace(S) freigegeben, kann die Bearbeitung von Programm P(i) fortgesetzt werden. Bei manuellem Verfahren der Roboter (etwa bei Inbetriebnahme, nach Stopp u.s.w.) muss der Benutzer über die Bedieneinheit die Verriegelungen/Semaphoren explizit verwalten.

Bei der Programmierung und Inbetriebnahme von Roboteranlagen werden vom Programmierer bereits Verriegelungen gesetzt. Nach Erfahrung ist dies äußerst fehleranfällig. Das bisher beschriebene Verfahren zur Bestimmung von Verriegelungen in Programmen ohne Verriegelung kann folgendermaßen modifiziert werden, um bestehende Verriegelungen auf Vollständigkeit zu prüfen und gegebenenfalls zu ergänzen.

1. Die vorhandenen Programme werden analysiert und die Zuordnung von Sätzen und Verriegelungen bestimmt. Die vorhandenen Verriegelungen werden als kritische Abbildung K(i,j) interpretiert: K(i,j) = TRUE genau dann, wenn aufgrund vorhandener Verriegelungen Satz i von Roboter 1 und Satz j von Roboter 2 nicht gleichzeitig durchlaufen werden können. (Die Argumentation ist also in gewisser Weise invers zur Bestimmung der Verriegelungen: dort war C(i,i) = TRUE, falls Kollisionsgefahr besteht, und die Verriegelungen wurden entsprechend gesetzt. Hier wird K(i,j) aus bestehenden Verriegelungen bestimmt).

2. Durchführung des Verfahrens zur Bestimmung von Verriegelungen. Ergebnis ist eine minimale Menge von erforderlichen Verriegelungen, definiert über die kritische Abbildung C(i,j).

3. Falls K(i,j) = TRUE gilt für alle i,j, für die C(i,j) = TRUE gilt, so sind die bereits programmierten Verriegelungen ausreichend. (K(i,j) = TRUE, aber C(i, j) = FALSE entspricht einer unnötigen Verriegelung, die aber die Sicherheit nicht gefährdet).

4. Falls K(i,j) = FALSE gilt für ein i,j, für das C(i,j) = TRUE gilt, so besteht Kollisionsgefahr. Alternativ wird eine Meldung ausgegeben, die den Benutzer zur Programmierung einer Verriegelung auffordert (und andernfalls den Programmstart verhindert), oder eine Verriegelung wird für C(i,j) automatisch eingefügt.

Bei Anlagen im Betrieb ist es bisweilen nötig, programmierte Punkte zu ändern, da sich eventuell Zuführeinrichtungen, Werkzeuge oder andere Peripherieeinrichtungen mechanisch verändert haben (Verschleiß, Beschädigung, Alterung). Üblicherweise sind aber nur wenige Punkte bzw. wenige Sätze betroffen, oft nur an einem einzelnen Roboter. Potentiell entstehen dabei neue Kollisionsmöglichkeiten, die vor der Umprogrammierung nicht vorlagen. Aus Zeitgründen soll die Ermittlung der Verriegelungen schnellstmöglich geschehen. Sind nun die Verriegelungen an diesem Roboter mit dem auf den Seiten 18 bis 20 beschriebenen Verfahren ermittelt worden, so kann besonders vorteilhaft festgestellt werden, wie die Verriegelungen auf allen Robotern geändert werden müssen. Dazu wird angenommen, dass die Variablen D1(z,r,s) bzw. D2(z,r) in externem Speicher abgelegt wurden. Weiter nimmt die Erfindung an, dass zu jedem Satz bzw. Punkt über eine Variable bekannt ist, ob dieser Satz bzw. Punkt seit der letzten Durchführung des Verfahrens zur Bestimmung von Verriegelungen geändert wurden. Von den Informationen D1, D2 müssen dann nur diejenigen über die (relativ) zeitaufwändige geometrische Schnittprüfung mit Würfeln neu berechnet werden, die geänderte Sätze betreffen. Danach werden alle alten Verriegelungen aus den Programmen entfernt und anhand der neuen Information D1, D2 neue Verriegelungen eingetragen.

**Patentansprüche**

1. Verfahren zum Schützen von mindestens einem Roboter, insbesondere eines Mehrachs-Industrie-Roboters gegen Kollisionen, **dadurch gekennzeichnet, dass** Bewegungen des mindestens einen Roboters automatisch auf mögliche Kollisionen geprüft werden, und dass, falls notwendig, in den Bewegungsablauf automatisch Verriegelungen eingefügt werden.

2. Verfahren nach Anspruch 1, **dadurch gekennzeichnet, dass** Programm-Bewegungen des mindestens einen Roboters vor Ausführung des Programms automatisch auf mögliche Kollisionen geprüft werden, und dass in den Bewegungsablauf erzeugenden Programmtext automatisch Verriegelungsanweisungen einfügt.

3. Verfahren nach Anspruch 1 oder 2, **dadurch gekennzeichnet, dass** vor Einfügung einer verriegelung, vorzugsweise vor dem Prüfen auf mögliche Kollisionen, zulässige Verriegelungspunkte automatisch bestimmt werden.

4. Verfahren nach Anspruch 3, **dadurch gekennzeichnet, dass** Satzgrenzen als mögliche Verriegelungspunkte bestimmt werden.

5. Verfahren nach einem der Ansprüche 1 bis 4, **dadurch gekennzeichnet, dass** zur Kollisionsbestimmung Hüllobjekte der Roboter oder von Roboterteilen erzeugt werden, die auf Kollisionen hin geprüft werden.

6. Verfahren nach Anspruch 5, **dadurch gekennzeichnet, dass** Hierarchien von Hüllobjekten erzeugt werden.

7. Verfahren nach einem der vorangehenden Ansprüche, **dadurch gekennzeichnet, dass** der Durchschnitt der Hüllvolumina mindestens zweier Roboter bestimmt wird.

8. Verfahren nach einem der Ansprüche 1 bis 7, **dadurch gekennzeichnet, dass** der minimale Abstand der Hüllvolumina bestimmt wird.

9. Verfahren nach einem der Ansprüche 1 bis 5, **dadurch gekennzeichnet, dass** der Arbeitsraum der Roboter in disjunkte Teilvolumina aufgeteilt wird und für jedes Teilvolumen in einer zugeordneten Tabelle eingetragen wird, für welche Sätze jeder Roboter das jeweilige Teilvolumen belegt.

10. Verfahren nach Anspruch 9, **dadurch gekennzeichnet, dass** der Arbeitsraum der Roboter in disjunkte Würfel aufgeteilt wird und dass für jeden Würfel in einer zugeordneten Tabelle eingetragen wird, für welche Sätze jeder Roboter den jeweiligen Würfel belegt.

11. Verfahren nach einem der vorangehenden Ansprüche, **dadurch gekennzeichnet, dass** aufeinanderfolgende Verriegelungen miteinander verschmolzen werden.

Fig. 1

**Programm Roboter 1 (R1)**          **Programm Roboter 2 (R2)**

R1Pstart          R2Pstart

R1P1          R2P1

R1P2          R2P2

R1P3          R2P3

R1P4          C

P

Fig. 2

Fig. 3

Fig. 4

Erstellen der Programme ~ *A*

Übertragung von CAD-Modellen und Programmen auf die Rechner, die den Trockenlauf ausführen ~ *B*

Prüfung der Programme auf zulässige Struktur ⌇*C*

Abbruch bei unzulässiger Struktur ~*C'*

Bestimmung der Kritischen Abbildung über Trockenlauf und CAD-Modelle ~ *D*

Verschmelzen von Semaphoren ~ *E*

Eintragen von Verriegelungen in die Programme ~ *F*

Rückübertragung der Programme auf die Steuerungsrechner ~ *S*

Ausführen der Programme ~ *H*

*Fig. 5*

HP [Hauptprogramm]

Fahre HP_P1     [Fahre zum Raumpunkt HP_P1]

Fahre HP_P2

Fahre HP_P3

[Aufruf UP]                              UP [Unterprogramm]

                                          Fahre UP_P1     [Fahre zum Raumpunkt UP_P1]

Fahre HP_P4                               Fahre UP_P2

Fahre HP_P5                               Fahre UP_P3

HP [Hauptprogramm]

Fahre HP_P1     [Fahre zum Raumpunkt HP_P1]

Fahre HP_P2

Fahre HP_P3

Fahre UP_P1     [Fahre zum Raumpunkt UP_P1]

Fahre UP_P2

Fahre UP_P3

Fahre HP_P4

Fahre HP_P5

Fig. 6